# EUROPEAN PATENT APPLICATION

(11) **EP 4 414 843 A1**
(43) Date of publication of application: **14.08.2024**
(21) Application number: 24156657.9
(22) Date of filing: 08.02.2024
(51) Int. Cl.: G06F 9/50, G06F 15/173

(54) **SYSTEMS AND METHODS FOR CREATING ISOLATED PARTITIONS IN A MULTI-CORE PROCESSING SYSTEM**

(30) Priority: 13.02.2023 US 202318168127
(71) Applicant: NXP USA, Inc., Austin TX 78735 (US)
(72) Inventor: Miller, Gary L., 5656AG Eindhoven (NL); Kimelman, Paul, deceased (NL)
(74) Representative: Miles, John Richard

(57) **Abstract**

Systems and methods for dynamically creating multiple isolated partitions in a multi-core processing system have been described. For example, an illustrative, nonlimiting embodiment, an integrated circuit may include: a plurality of routers configured to provide a mesh network among a plurality of muti-cluster tiles (MCTs), where each MCT comprises a plurality of processing cores, and a control circuit coupled to the plurality of routers, where the control circuit is configured to control at least one of the plurality of routers to enable or disable at least a portion of the mesh network to create, among the plurality of processing cores, isolated partitions of processing cores.

## Description

### FIELD

This disclosure relates generally to data processing system architectures, and more specifically, to data processing systems with multiple cores.

### BACKGROUND

Processors are electronic circuits capable of executing one or more sequences of instructions, tasks, or threads. In a conventional processor, operations are executed in series. As such, if an operation takes a long time to complete (e.g., if its completion depends upon the result of an external event), a subsequent operation still has to wait in a queue. The wait occurs even when execution of the subsequent operation is independent from that of the preceding operation, and regardless of whether the processor is otherwise available during that time.

In addition, a data processing system may have multiple processors or cores. Multiprocessor computer systems have been known for many years, but their architecture, in particular how software running on one processor interacts with software running on another processor, has generally made use of expensive and inefficient mechanisms such as shared memory and inter-processor interrupts when communication among processors is desired. However, when communication among processors is not desired, applications or instructions running in one processor might unintentionally or even maliciously corrupt or interfere with applications running on other processors.

The concept of multithreading or multitasking was developed, at least in part, to improve the use of available computing resources. Generally speaking, a multithreading or multitasking processor includes hardware support for switching between different instructions, tasks, or threads more efficiently than conventional processors.

As a processor operates, errors may occur. And, in the event of a processing error, techniques exist to capture state information of the processor at the time of the error. Such information may include, for instance, register values, pointers, program counters, condition codes, and the like. Once captured, a debugging tool may then be used to analyze that information. Even in the case of a multithreading processor or multiple processors, however, debug operations necessary to capture state information may cause the multithreading processor or the other processors to halt the execution of other instructions, applications, or threads.

### BRIEF DESCRIPTION OF THE DRAWINGS

The present invention(s) are illustrated by way of example and are not limited by the accompanying figures, in which like references indicate similar elements. Elements in the figures are illustrated for simplicity and clarity and have not necessarily been drawn to scale.
FIG. 1 depicts a block diagram of a multi-core processing system with which isolated partitions may be created in multiple types of configurations, according to some embodiments.
FIG. 2A is a block diagram depicting the creation of four isolated partitions in a multi-core processing system, according to some embodiments.
FIG. 2B is a block diagram depicting the creation of three isolated partitions in a multi-core processing system, according to some embodiments.
FIG. 2C is a block diagram depicting the creation of two isolated partitions in a multi-core processing system, according to some embodiments.
FIG. 3 is a block diagram of a multi-cluster tile (MCT) featuring 16 processing cores and an internal and external mesh network for communication, according to some embodiments.
FIG. 4 is a block diagram of a system interface for a quartile of a multi-core processing system, according to some embodiments.
FIG. 5 is a block diagram of a multi-core processing system that has two MCTs per quartile, and where isolated partitions may be created in multiple types of configurations, according to some embodiments.

### DETAILED DESCRIPTION

Systems and methods described herein are usable for dynamically creating multiple isolated partitions in multi-core processing systems.

Some embodiments of the systems and methods described herein include a grid of many small, interconnected processing cores running at high frequency to allow for a high degree of parallelism. Due to the highly parallel nature of these embodiments, this grid may be proficient in AI applications such as accelerating Recurrent Neural Networks (RNNs), Temporal Convolutional Networks (TCNs) and math operations. Some of these embodiments provide for a mesh of core clusters. In some embodiments, each core cluster may be composed of four processing cores, along with Level 1 (L1) and Level 2 (L2) caches, and tightly coupled memories. The mesh architecture may provide for interconnections between all core clusters, in order to enable multi-core processing for an application, in some embodiments. The mesh may also provide for data sharing between core clusters (e.g., using a distributed L2 cache), access to external memory, send/receive messaging for collaboration, or broadcast signals for triggers, in some embodiments.

In addition, some embodiments provide for flexible isolation and virtualization features for the multi-core processing system. Instead of only supporting a single isolated partition with one virtual application, where the processing capability offered to an application is fixed at design time, some embodiments allow the multiple cores to be configured at run-time or start-up, in order to support various capabilities. These capabilities may include dividing the multiple processing cores into separate isolated partitions of various configurations, where each partition contains a subset of the multiple processing cores. In addition, these capabilities may include allowing multiple virtual applications to share the cores of the multi-core processing system. In some embodiments, multiple applications may share the cores of a single isolated partition. This sharing may occur while other applications share the cores of a different isolated partition, in some of these embodiments.

Isolated partitions may provide critical support for the virtualization of applications, in some embodiments. Isolation may ensure that virtual applications running in one isolated partition cannot corrupt or interfere in any way with virtual applications running in other isolated partitions, in some embodiments. Some embodiments may provide for multiple sets of memory-mapped virtual configuration registers, in order to provide support for multiple virtual applications per isolated partition. For example, 4 sets of memory-mapped virtual configuration registers may provide support for up to 4 virtual applications per isolated partition. If there are 4 partitions, for example, this allows for anywhere from 1 to 16 virtual applications to safely share the multi-core processing system.

In some embodiments, the multiple cores of a multi-core processing system may be segregated into core clusters and multi-cluster tiles (MCTs). In some embodiments, each core cluster might contain 4 processing cores, for example. In some embodiments, each multi-cluster tile may contain 4 core clusters, which means a total of 16 processing cores, for example. In other embodiments, the number of cores per core cluster or per multi-cluster tile may differ, and these numbers should not be construed as limiting.

In some embodiments, the multi-core processing systems may segregate their MCTs into quartiles, where each quartile contains a quarter of the total processing cores. Different embodiments may have a different number of MCTs, and hence a different number of cores, per quartile. This specification will refer to the terms "low-end", "mid-range", "upper mid-range", and "high-end" to describe different configurations of a different number of MCTs, and hence a different number of cores, per quartile.

For example, a "low-end" configuration might include 1 MCT per quartile. Using the example of 16 cores per MCT, this would mean that each quartile includes 16 cores, for a total of 64 cores throughout the multi-core system. As another example, a "mid-range" configuration might include 2 MCTs per quartile. Using the example of 16 cores per MCT, this would mean that each quartile includes 32 cores, for a total of 128 cores throughout the multi-core system. As another example, an "upper mid-range" configuration might include 3 MCTs per quartile. Using the example of 16 cores per MCT, this would mean that each quartile includes 48 cores, for a total of 192 cores throughout the multi-core system. As another example, a "high-end" configuration might include 4 MCTs per quartile. Using the example of 16 cores per MCT, this would mean that each quartile includes 64 cores, for a total of 256 cores throughout the multi-core system. As stated previously, the number of cores per core cluster, or per MCT, or the number of MCTs per quartile may differ, and these numbers should not be construed as limiting.

As stated previously, the multiple cores of the multi-core system may be partitioned into separate isolated partitions of various configurations, where each partition contains a subset of the multiple processing cores. In some embodiments, the cores may be partitioned into any number of isolated partitions, from 1 all the way up to the total number of processing cores itself. In some embodiments, the number of cores per partition may be equal across the partitions. However, in other embodiments the number of cores per partition might be different for different partitions. In other embodiments, some partitions might have the same number of cores, while other partitions have a different number of cores.

Some embodiments use the previously described quartile structure of a multi-core processing system for the partitioning into the isolated partitions. However, other embodiments do not use a quartile structure of the processing cores for partitioning, and still other embodiments do not have a quartile structure of the processing cores at all. Some embodiments may use another kind of structuring of the processing cores for partitioning the processing cores into isolated partitions, and the previously described quartile structure is only one example of a processing core structure that may be used for partitioning.

Using the example of quartiles and MCTs, where each MCT contains 16 cores, then, for a "low-end" configuration that includes 1 MCT per quartile could have the following partition configuration: 1 isolated partition comprising 64 cores, 2 isolated partitions each comprising 32 cores, three isolated partitions where one partition comprises 32 cores and the other two partitions comprising 16 cores, and 4 isolated partitions each comprising 16 cores. A "mid-range" configuration that includes 2 MCTs per quartile could have the following partition configuration: 1 isolated partition comprising 128 cores, 2 isolated partitions each comprising 64 cores, three isolated partitions where one partition comprises 64 cores and the other two partitions comprising 32 cores, and 4 isolated partitions each comprising 32 cores. An "upper mid-range" configuration that includes 3 MCTs per quartile could have the following partition configuration: 1 isolated partition comprising 192 cores, 2 isolated partitions each comprising 96 cores, three isolated partitions where one partition comprises 96 cores and the other two partitions comprising 48 cores, and 4 isolated partitions each comprising 48 cores. An "high-end" configuration that includes 4 MCTs per quartile could have the following partition configuration: 1 isolated partition comprising 256 cores, 2 isolated partitions each comprising 128 cores, three isolated partitions where one partition comprises 128 cores and the other two partitions comprising 64 cores, and 4 isolated partitions each comprising 64 cores.

MCTs may be interconnected both internally and externally via mesh routers, in some embodiments, to enable multi-core processing for an application. In addition, directional steering may be supported for sharing distributed L2 cache read/write data between all core clusters, in some of these embodiments. The L2 cache may be distributed across the whole processing system, in some embodiments, such than any core cluster in any quartile may access any other core cluster's L2 cache, enabling a larger L2 cache for applications. Accesses to external memory may be directed to the associated system interface. Core clusters may also be interconnected to one another via send/receive bus for collaboration, and by broadcast signals for triggers. Run-time configurable isolated partitions may be created at start-up as needed for each client's application.

The isolated partitions provide support for virtualization, in some embodiments. Isolated partitions may assure that virtual applications running in one isolated partition cannot corrupt or interfere in any way with virtual applications running in other isolated partitions. Additionally, 4 sets of memory mapped virtual configuration registers provide support for up to 4 virtual applications per isolated partition, allowing for up to 4 virtual applications with 1 partition, or up to 16 virtual applications with 4 partitions, to safely share the processing system. Providing flexible run-time configurations at start-up for isolated partitions provides a mechanism for supporting many virtual applications, in some embodiments.

A system interface may schedule each virtual application based on priority to effectively share the isolated partition(s). The processing system may provide a flexible run-time configurations, for example as selected by a user or designer's instruction(s), at start-up, for isolated partitions.

In various implementations and embodiments, the systems and methods described herein may also be used to provide debug support logic. Traditional debug methodologies are limited in their ability to provide debugging support for many-core parallel programming. Synchronization problems or bugs due to race conditions are particularly difficult to detect with software debugging tools. Most traditional debugging approaches rely on globally synchronized signals, but these pose problems in terms of scalability. Some embodiments overcome these problems by providing for debug support logic that may access information manipulated by one or more cores, with multiple threads or automatic context switch features, and without interfering with the processor's pipeline. As such, these systems and methods may allow having one or more applications in debug mode while others continue to execute.

Some embodiments provide for extensible debug support from the "low-end" version (which might be up to 64 cores, for example) to the "high-end" version (which might be up to 256 cores, for example). These embodiments may support individualized, simultaneous debug of configurable isolated partition options. For example, some of the quartile embodiments may support 1 isolated partition with all cores, with up to 4 isolated partitions each with 1/4 of the cores. Furthermore, some embodiments provide simultaneous profiling support for multiple virtual applications per partition. For example, this may be 4 virtual applications per partition, for up to 16 virtual applications with 4 partitions. Therefore, these embodiments may provide debug and profiling support for a processing system with multiple cores, isolated partition options and virtual applications.

A debug architecture as described herein may be configured to support the partitioning of processing cores with context switching, where the context is stored in a memory or secondary register file. For example, such a system may include: (a) multiple partitions of processor cores (including pipeline and registers/flags), (b) context storage (memory or register file) per partition used to store thread contexts with suspended execution, (c) a context unit per partition responsible for executing save/restore of context to/from the context storage from/into the processor state registers/flags, and (d) a debug support unit per partition, according to some embodiments.

For each partition, the foregoing debug architecture embodiments may context switch between multiple application threads, saving and restoring them from the context storage. The context unit may execute a context switch upon a request from dedicated scheduling hardware, a software request, or a halt command from the debug support unit or the processor itself. Halt requests may make the context unit suspend the execution of the running thread and save its context into the context storage, as it does in a thread preemption operation. However, in this case, the halted thread may only be put back into normal execution upon a request from the debug unit. This halting process may be performed with multiple threads, so that a plurality of them may be halted in a given time. The threads in halt state may have their contexts accessed by the debug unit through the context unit. The processor cores may continue executing code from other threads not halted, context switches being performed as usual.

In some embodiments, systems and methods for a debug architecture described herein may leverage hardware context memory and switch mechanism used in conventional multithreading applications to implement hardware debug support features. The same mechanism(s) used to save/restore thread context to/from context storage may provide debug features such as breakpoint, single-step, register/flag examining and modification.

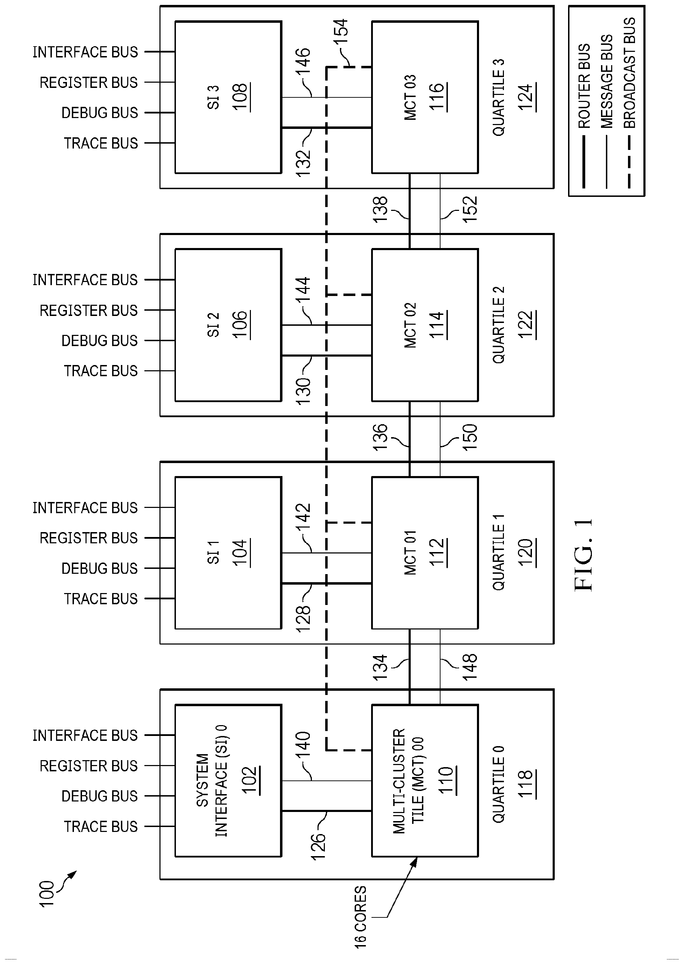

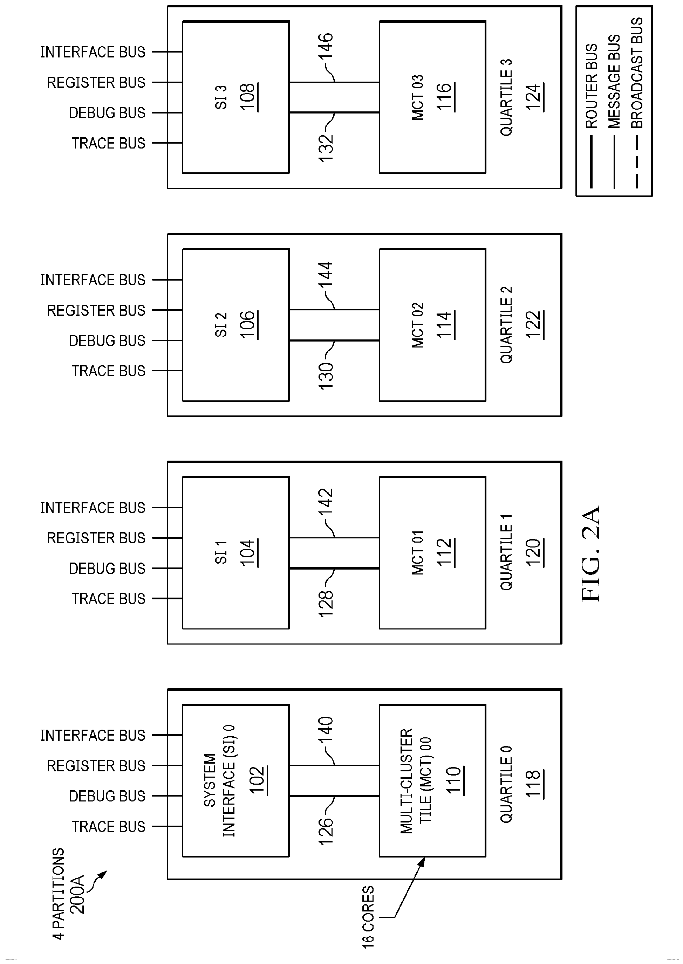

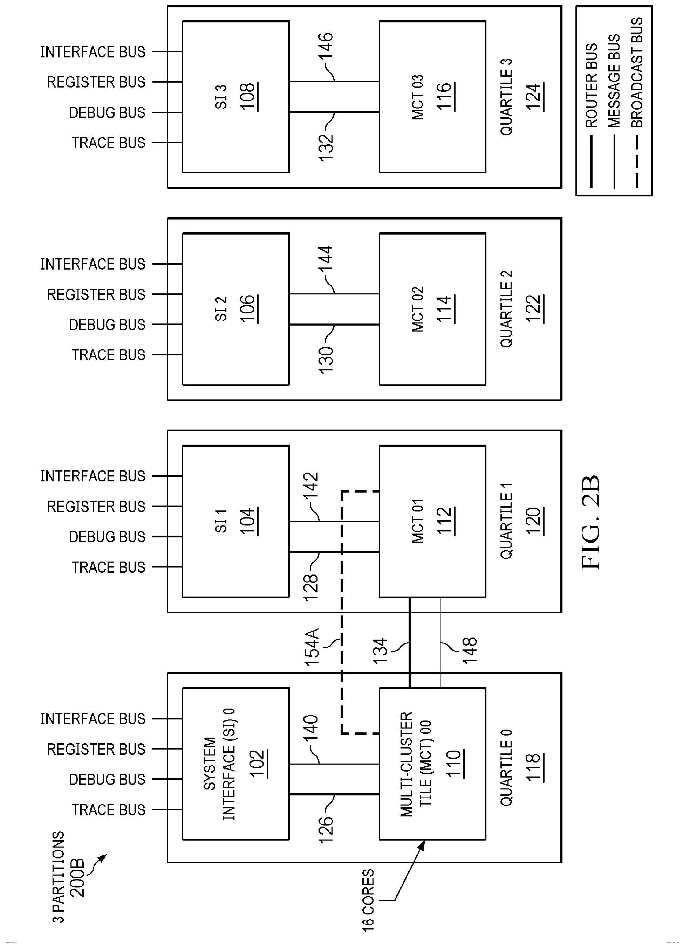

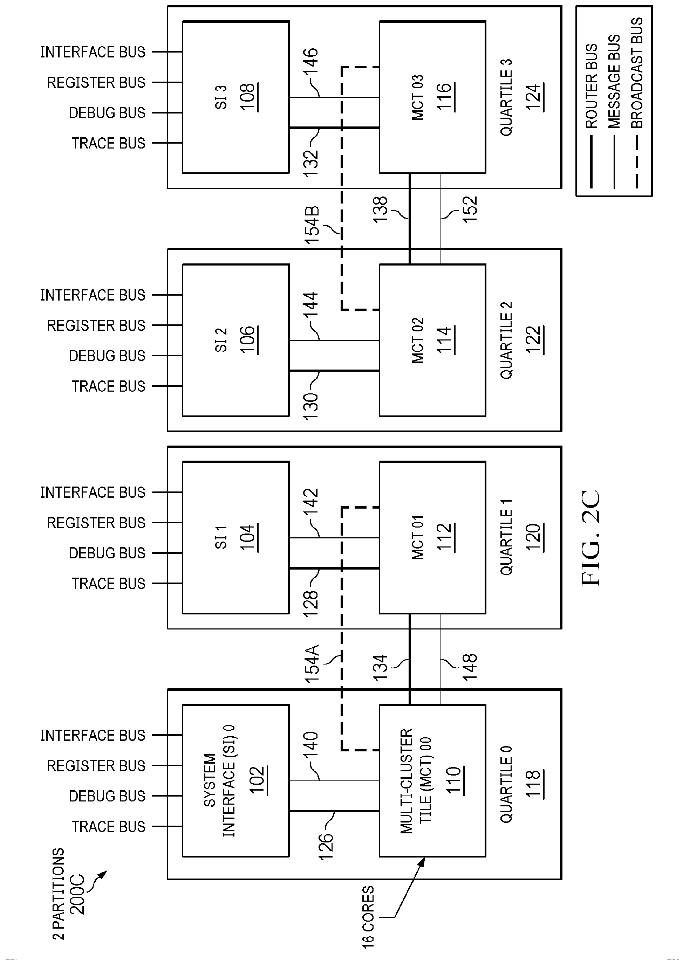

Run control debug (break, step, register dump) may function identically across all processing core versions (64 up to 256 cores), isolated partition configurations (1, 2, 3 and 4), and virtual applications (up to 16), in some embodiments. For these embodiments, the virtual applications may debug and profile their code securely without corrupting other virtual applications. All cores in all MCTs within an isolated partition (and none outside) may be simultaneously halted, single stepped, and interrogated. FIGs. 1, 2A, 2B, and 2C illustrate the different run-time configurations for isolated partitions for a "low-end" processing core version.

Like run control debug, trace debug may also expand across all processing core versions (64 up to 256 cores), isolated partition configurations (1, 2, 3 and 4), and virtual applications (up to 16), in some embodiments. Trace debug may be used for race condition issues and Software Quality Assurance (SQA). In some embodiments, however, trace bandwidth demands for many-core architectures are such that not everything may be visible because it exceeds Device Trace Port capability. Therefore, some of these embodiments provide for a focus trace on all cores and inter-core communication channels within a single MCT, per Quartile, for simultaneous visibility. Accordingly, 4 of 4 MCTs for a "low-end" configuration, 4 of 8 MCTs for a "mid-range" configuration, and 4 of 16 MCTs for a "high-end" configuration may be traced simultaneously. All may be covered sequentially for SQA.

Like run control debug, and trace debug, some embodiments may provide for profiling support across all processing core versions (64 to 256 Cores), isolated partition configurations (1, 2, 3 and 4), and virtual applications (up to 16). Performance and other profiling information may be collectable for each individual virtual application regardless of the processing core version and isolated partition configuration, in these embodiments.

In some embodiments, these systems and methods may be applicable to various types of cores, including microcontrollers, controllers, microprocessors, processors, central processing units (CPUs), programmable devices, etc., which are generically referred to herein as "processors" or "cores." In general, a processor may be configured to perform a wide variety of operations-and may take a variety of forms-depending upon its particular application (e.g., automotive, communications, computing and storage, consumer electronics, energy, industrial, medical, military and aerospace, etc.). Accordingly, as will be understood by a person of ordinary skill in the art in light of this disclosure, the processor(s) or core(s) described herein are provided only for sake of illustration, and numerous variations are contemplated.

FIG. 1 depicts a block diagram of a multi-core processing system (100) with which isolated partitions may be created in multiple types of configurations, according to some embodiments. FIG. 1 depicts a quartile embodiment where the processing system is divided into 4 quartiles (118, 120, 122, 124). Each of these 4 quartiles contain one MCT in the embodiment of FIG. 1. For example, quartile 0 (118) includes MCT 00 (110), quartile 1 (120) includes MCT 01 (112), quartile 2 (122) includes MCT 02 (114), and quartile 3 (124) includes MCT 03 (116). Other embodiments may have 2, 3, 4 or more MCTs per quartile. Other embodiments, might not have quartiles at all, but might be divided up into other configurations, such as thirds, fifths, sixths, etc. In the embodiment of FIG. 1, each MCT includes 16 processing cores. Of course, other embodiments may have a different number of processing cores per MCT.

In the embodiment of FIG. 1, each quartile also includes a system interface ("SI"). For example, quartile 0 (118) includes SI 0 (102), quartile 1 (120) includes SI 1 (104), quartile 2 (122) includes SI 2 (106), and quartile 3 (124) includes SI 3 (108). Each SI component has the same input/output ("I/O") busses that allow for external communication with the quartile. In the embodiment of FIG. 1, each SI component communicates with external entities using a trace bus, debug bus, register bus, and interface bus. Then each SI may communicate with its MCT using a router bus and a message bus. For example, SI 0 (102) communicates with MCT 00 (110) using router bus (126) and message bus (140). As another example, SI 1 (104) communicates with MCT 01 (112) using router bus (128) and message bus (142). As another example, SI 2 (106) communicates with MCT 02 (114) using router bus (130) and message bus (144). As another example, SI 3 (108) communicates with MCT 03 (116) using router bus (132) and message bus (146).

In the embodiments shown in FIG. 1, each MCT may also communicate with other MCTs that are physically adjacent to it, and within the same partition. The embodiment of FIG. 1 depicts one partition that encompasses all of the quartiles, and thus all of the MCTs. Therefore, MCT 00 (110) may communicate with adjacent MCT 01 (112) using a router bus (134) and message bus (148) between the MCTs. MCT 01 (112) may communicate with adjacent MCT 02 (114) using a router bus (136) and message bus (150) between the MCTs. MCT 02 (114) may communicate with adjacent MCT 03 (116) using a router bus (138) and message bus (152) between the MCTs. In addition, in the embodiments of FIG. 1, each of the MCTs may also communicate using a broadcast bus (154).

The router bus and message bus may effectively be shared across the MCTs in a partition. The router and message bus may communicate north with the appropriate SI, south with any other MCTs in the quartile, and east/west with MCTs of other quartiles (as long as those other quartiles are within the same partition). The router bus may be used for L2 cache consistency, coherent data sharing, internal data accesses, or external data accesses, in some embodiments. For example, the router bus may communicate event messages between L2 caches in order to keep data consistent. These event messages might be load allocate or load modify event messages, for example.

The message bus may be a send/receive message bus that has custom instructions to send messages between cores, such as via ports. The message bus may be used for task scheduling, for example. In some embodiments, there might be "root core" per MCT, per quartile, or per partition, depending on the embodiment. The "root core" may be a task manager that may communicate with the other "worker cores." The "root core" may utilize the message bus to send and receive messages to the "worker cores" for example. The messages may tell the "worker cores" what work to do, for example. After receiving these messages via the message bus, the worker cores may start fetching data from a particular address and start working, in some embodiments. After one or more "worker cores" are done, they may notify the "root core" via the message bus, and then the "root core" may assign additional work to these one or more "worker cores."

The broadcast bus 154, in some embodiments, may be a smaller bus that is routed to all the MCTs in a partition. The broadcast bus may be used for synchronization between the cores, in some embodiments. A "root core" might send a broadcast signal on the broadcast bus to synchronize the "worker cores" for example. As another example, all the cores of a partition might be waiting on a broadcast signal on the broadcast bus to do something.

FIG. 2A is a block diagram depicting the creation of four isolated partitions in a multi-core processing system, according to some embodiments. While FIG. 1 depicted all 4 quartiles as one partition, FIG. 2A instead depicts four partitions, with each quartile (118, 120, 122, and 124) as its own isolated partition. Each quartile (118, 120, 122, and 124) has its own MCT (110, 112, 114, and 116 respectively) and its own SI (102, 104, 106, and 108 respectively). Other embodiments may have 2, 3, 4 or more MCTs per quartile. Other embodiments, might not have quartiles at all, but might be divided up into other configurations, such as thirds, fifths, sixths, etc. In the embodiment of FIG. 2A, each MCT includes 16 processing cores. Of course, other embodiments may have a different number of processing cores per MCT.

In this case of FIG. 2A, the isolated partition control circuit may control one or more mesh routers to enable router bus connections 126-132 and disable router bus connections 134-138 (e.g., by controlling one or more transistors, switches, multiplexers, or the like). Additionally, or alternatively, the isolated partition control circuit may control one or more mesh routers to enable message bus connections 140-146 and disable message bus connections 148-152 (not shown). Additionally, or alternatively, the isolated partition control circuit may control one or more mesh routers to disable broadcast bus 154 across the different partitions (not shown). The isolated partition control circuit may control these one or more mesh routers at run-time, in some embodiments. Therefore, in the embodiments depicted in FIG. 2A, the addressing for the caches will only be applicable to each partition (i.e. each quartile in the 4 partition case), instead of being applicable to all the quartiles (as in the 1 partition case).

FIG. 2B is a block diagram depicting the creation of three isolated partitions in a multi-core processing system, according to some embodiments. While FIG. 1 depicted all 4 quartiles as one partition, and FIG. 2A depicted four partitions, FIG. 2B instead depicts three partitions, with quartiles (118, 120) as one isolated partition, and quartiles 122, and 124 as their own isolated partition. Each quartile (118, 120, 122, and 124) has its own MCT (110, 112, 114, and 116 respectively) and its own SI (102, 104, 106, and 108 respectively). Other embodiments may have 2, 3, 4 or more MCTs per quartile. However, in the case of quartiles 0 and 1 (118 and 120), the majority of one system interface may become inactive, and the control of the partition may be handled by the other system interface, in some embodiments. Other embodiments, might not have quartiles at all, but might be divided up into other configurations, such as thirds, fifths, sixths, etc. In the embodiment of FIG. 2B, each MCT includes 16 processing cores. Of course, other embodiments may have a different number of processing cores per MCT.

In the embodiments depicted by FIG. 2B, the isolated partition control circuit may control one or more mesh routers to enable router bus connections 126-134 and disable router bus connections 136 and 138 (not shown). Additionally, or alternatively, the isolated partition control circuit may control one or more mesh routers to enable message bus connections 140-148 and disable message bus connections 150 and 152 (not shown). Additionally, or alternatively, the isolated partition control circuit may control one or more mesh routers to enable only a portion of broadcast bus 154A between MCTs 110 and 112. The isolated partition control circuit may control these one or more mesh routers at run-time, in some embodiments.

FIG. 2C is a block diagram depicting the creation of two isolated partitions in a multi-core processing system, according to some embodiments. While FIG. 1 depicted all 4 quartiles as one partition, FIG. 2A depicted four partitions, and FIG. 2B depicted three partitions, FIG. 2C instead depicts two partitions, with quartiles (118, 120) as one isolated partition, and quartiles (122, 124) as a second isolated partition. Each quartile (118, 120, 122, and 124) has its own MCT (110, 112, 114, and 116 respectively) and its own SI (102, 104, 106, and 108 respectively). Other embodiments may have 2, 3, 4 or more MCTs per quartile. However, in the case of quartiles 0 and 1 (118 and 120), the majority of one system interface may become inactive, and the control of the partition may be handled by the other system interface, in some embodiments. Similarly, in the case of quartiles 2 and 3 (122 and 124), the majority of one system interface (e.g. 106) may become inactive, and the control of the partition may be handled by the other system interface (e.g., 108), in some embodiments. Other embodiments, might not have quartiles at all, but might be divided up into other configurations, such as thirds, fifths, sixths, etc. In the embodiment of FIG. 2B, each MCT includes 16 processing cores. Of course, other embodiments may have a different number of processing cores per MCT.

In the embodiments depicted by FIG. 2C, the isolated partition control circuit may control one or more mesh routers to enable router bus connections 126-134, 138 and disable router bus connection 136 (not shown). Additionally, or alternatively, the isolated partition control circuit may control one or more mesh routers to enable message bus connections 140-148, 152 and disable message bus connection 150 (not shown). Additionally, or alternatively, the isolated partition control circuit may control one or more mesh routers to enable only a portion of broadcast bus 154A between MCTs 110 and 112, and also between MCTs 114 and 116, but not between MCTs 112 and 114. The isolated partition control circuit may control these one or more mesh routers at run-time, in some embodiments.

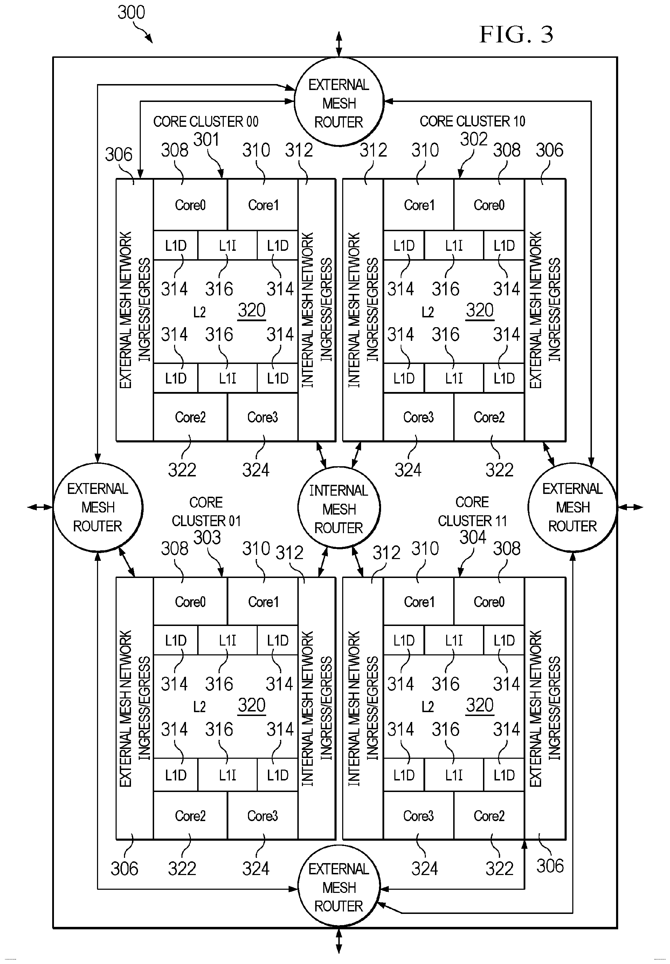

FIG. 3 is a block diagram of a multi-cluster tile (MCT) featuring 16 processing cores and an internal and external mesh network for communication, according to some embodiments. The MCT (300) contains four core clusters: core cluster 00 (301), core cluster 01 (303), core cluster 10 (302), and core cluster 11 (304). Each core cluster contains four cores: Core 0 (308), Core1 (310) Core 2 (322) and Core3 (324). Each core has its own level 1 cache L1D. Core 0 (308) is associated with one L1D 314, Core1 (310) is associated with a different L1D 314, Core2 (322) is associated with a different L1D 314, and Core3 (324) is associated with a different L1D 314. Two adjacent cores share a portion of the L1 cache, notated as L1I (316).

In addition, each core cluster has a larger L2 cache, denoted L2 (320). The L2 cache may be shared across all the cores in a partition, in some embodiments. In some embodiments, the L2 cache may be fully coherent in a snoop-less manner. The L2 may allow the sharing of coherent data between all the cores in a partition, in some embodiments. The L2 cache may utilize the internal and external mesh network, such as the router bus, to facilitate the sharing of this data, in some embodiments.

The cores (308, 310, 322, 324) within a core cluster may communicate with each other. In addition, a core cluster may communicate with other core clusters in the MCT through the internal mesh router. The internal mesh router is coupled to an internal mesh network ingress/egress component (312) for each core cluster (301, 302, 303, 304) that facilitates the I/O between the core cluster and the internal mesh router. In addition, each core cluster (301, 302, 303, 304) also includes an external mesh network ingress/egress component (306) that facilitates communication to the external mesh through the external mesh routers.

The MCT (300) of FIG. 3 also comprises four external mesh routers: one at the bottom of FIG.3 to communicate to an MCT placed below this MCT on the physical die; one at the right-side of FIG. 3 to communicate with an MCT placed to the right of this MCT on the physical die; one on the left-side of FIG. 3 to communicate with an MCT placed to the left of this MCT on the physical die; and one at the top of FIG. 3 to communicate with either an MCT or a SI component placed above this MCT on the physical die. The external mesh routers and the external mesh network ingress/egress (306) may support signaling for the router bus, message bus, and broadcast bus as depicted in FIG. 1. Each of the external mesh routers may communicate with its neighbor mesh routers. In addition, each external mesh router communicates with the external mesh network ingress/egress (306) of one core cluster. For example, the external mesh network ingress/egress (306) of core cluster 00 (301) directly communicates with the top-side external mesh router. The external mesh network ingress/egress (306) of core cluster 01 (303) directly communicates with the left-side external mesh router. The external mesh network ingress/egress (306) of core cluster 10 (302) directly communicates with the right-side external mesh router. The external mesh network ingress/egress (306) of core cluster 11 (304) directly communicates with the bottom-side external mesh router.

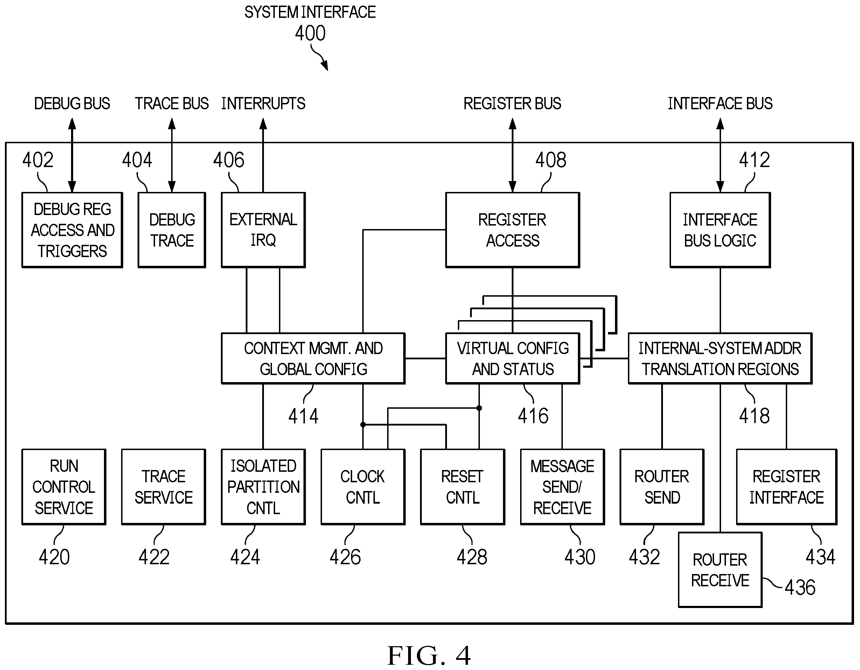

FIG. 4 is a block diagram of a system interface ("SI") (400) for a quartile of a multi-core processing system, according to some embodiments. As depicted in FIG. 1, the SI (400) has 4 different busses to communicate with external components: the debug bus, the trace bus, the register bus, and the interface bus. In addition, the SI (400) includes an external IRQ (406) component that provides interrupts to the external components from the multi-core processing system. The debug bus is coupled to a debug register access and triggers component (402) within the SI. This component in turn communicates with the run control service component (420) to handle debugging activities. The trace bus is coupled to a debug trace component (404) within the SI. This debug trace component (404) in turn communicates with the trace service (422) component to handle signal tracing within the MCTs for debugging purposes.

The register bus is connected to a register access component (408) within the SI. This register access component (408) is in turn coupled to a context management and global configuration component (414). This context management component provides for context switching between the up to 4 supported virtual applications of a partition. The 4 sets of virtual configuration and status (416) provide for 4 sets of memory-mapped virtual configuration registers, in order to provide support for up to 4 virtual applications per isolated partition. For example, the 4 sets of memory-mapped virtual configuration and status components (416) may provide support for up to 4 virtual applications per isolated partition. If there are 4 partitions, for example, this allows for anywhere from 4 to 16 virtual applications to safely share the multi-core processing system.

The interface bus is connected to interface bus logic (412) within the SI, which in turn communicates with internal-system address translation regions (418). The internal-system address translation regions (418) communicate with the router send component (432) which sends communications on the router bus to the MCT placed directly below this SI (400). The internal-system address translation regions (418) also communicate with the router receive component (436) which receives communications on the router bus from the MCT placed directly below this SI (400). The internal-system address translation regions (418) communicate with the register interface (434) which provides registers for the internal system address translation regions (418).

The message send/receive component (430) sends and receives communications on the message bus to/from the MCT placed directly blow this SI (400). The clock and reset control circuits (426, 428) provide clock and reset functionality to the MCTs in the quartile. The isolated partition control circuit (424) which communicates with the context management and global configuration component (414), provides control for the isolated partition configuration, as explained in FIGs. 2A-2C. The isolated partition control component (424) may control one or more mesh routers in its quartile to enable router bus connections within the isolated partition, and to disable router bus connections between different isolated partitions. Additionally, or alternatively, the isolated partition control circuit (424) may control one or more mesh routers to enable message bus connections within the isolated partition and disable message bus connections between different isolated partitions. Additionally, or alternatively, the isolated partition control component (424) may control one or more mesh routers to enable only a portion of broadcast bus between MCTs within an isolated partition, but not between MCTs of different partitions.

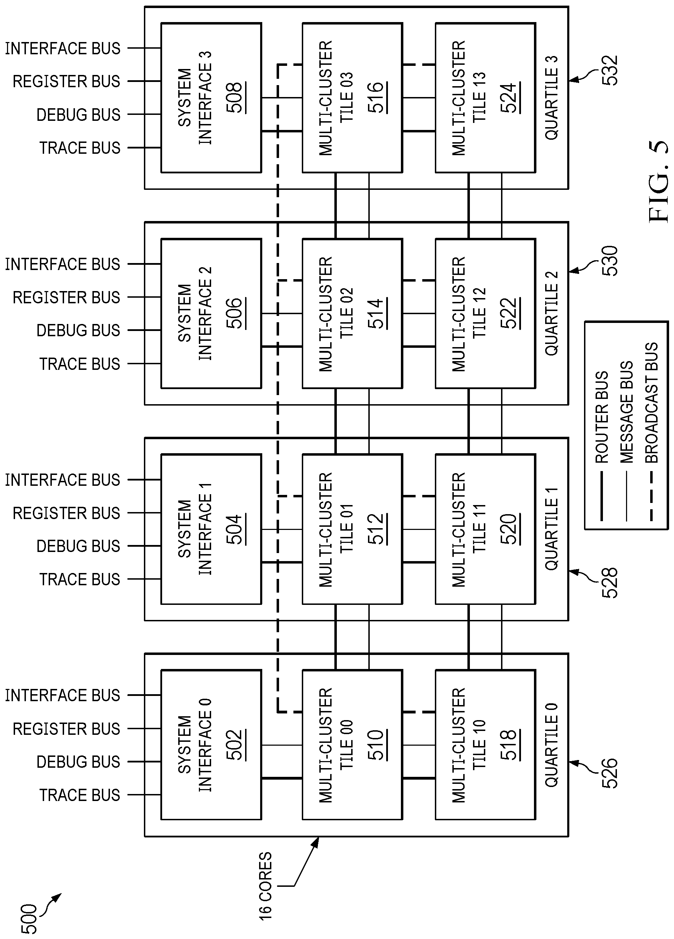

FIG. 5 is a block diagram of a multi-core processing system that has two multi-cluster tiles per quartile, and where isolated partitions may be created in multiple types of configurations, according to some embodiments. In the embodiment of FIG. 5, each quartile contains two MCTs. This may be called a "mid-range" configuration in some embodiments. For example, quartile 0 (526) includes MCT 00 (510) and MCT 10 (518). Quartile 1 (528) includes MCT 01 (512) and MCT 11 (520). Quartile 2 (530) includes MCT 02 (514) and MCT 12 (522). Quartile 3 (532) includes MCT 03 (516) and MCT 13 (524). Similar to the embodiments shown in FIGs. 2A-2C, the quartiles of FIG. 5 may be partitioned into isolated partitions.

As shown, FIG. 5 contains one partition and includes all 4 quartiles. However, the isolated partition control component (424) may control one or more mesh routers to enable only a portion of the router, broadcast, and message busses within an isolated partition, but disable those busses between isolated partitions. For example, similar to FIG. 2A, the isolated partition control component (424) may create 4 isolated partitions by disabling all the router, broadcast, and message busses between MCTs of different quartiles. Therefore, the broadcast, message and router busses would be disabled between the following MCTs: between MCT 00 (510) and MCT 01 (512); between MCT 01 (512) and MCT 02 (514); between MCT 02 (514) and MCT 03 (516); between MCT 10 (518) and MCT 11 (520); between MCT 11 (520) and MCT 12 (522); and between MCT 12 (522) and MCT 13 (524). As another example, similar to FIG. 2B, the isolated partition control component (424) may create 3 isolated partitions by enabling the router, broadcast, and message busses between quartile 0 (526) and quartile 1 (528), but disabling the router, broadcast, and message busses between quartile 1 (528) and quartile 2 (530), and between quartile 2 (530) and quartile 3 (532). As another example, similar to FIG. 2B, the isolated partition control component (424) may create 2 isolated partitions by enabling the router, broadcast, and message busses between quartile 0 (526) and quartile 1 (528), and between quartile 2 (530) and quartile 3 (532), but disabling the router, broadcast, and message busses between quartile 1 (528) and quartile 2 (530).

As such, systems and methods for dynamically creating multiple isolated partitions in a multi-core processing system have been described.

In an illustrative, non-limiting embodiment, an integrated circuit may include: a plurality of routers configured to provide a mesh network among a plurality of MCTs, where each MCT includes a plurality of processing cores, and a control circuit coupled to the plurality of routers, where the control circuit is configured to control at least one of the plurality of routers to enable or disable at least a portion of the mesh network to create, among the plurality of processing cores, isolated partitions of processing cores.

The portion of the mesh network may include at least one of: a router bus, a message bus, or a broadcast bus. The control circuit may be configured to control the plurality of routers at run-time.

The integrated circuit may be configured to allow access to L2 cache within a given isolated partition to processing cores of the given isolated partition to the exclusion of any other processing core of any other isolated partition. Each of the isolated partitions of processing cores may include an equal number of processing cores.

In some cases, the plurality of isolated partitions may include: two, three, or four isolated partitions. For example, the plurality of isolated partitions includes two isolated partitions, where each isolated partition includes 32, 64, or 128 processing cores.

When the plurality of isolated partitions includes three isolated partitions, a first isolated partition and a second isolated partition may each include 16, 32, or 64 processing cores, and a third isolated partition may include a different number of processing cores than the first and second isolated partitions. When the plurality of isolated partitions includes four isolated partitions, each isolated partition may include 16, 32, or 64 processing cores.

The control circuit may be configured to control another one or more of the plurality of routers to enable or disable at least another portion of the mesh network to create another isolated partition of processing cores distinct from the isolated partitions of processing cores. At least a given one of the plurality of isolated partitions may enable multi-core processing of applications executed on processing cores of the given isolated partition. For example, the applications may include virtual applications.

At least one of the plurality of isolated partitions may allow shared execution of an application between one or more processing cores of the at least one isolated partition to the exclusion of any other processor core of any other isolated partition. The at least one of the plurality of isolated partitions may further include a context management circuit configured to switch a context of the one or more processing cores between a first application and a second application within the at least one isolated partition.

In another illustrative, non-limiting embodiment, a method may include receiving, at a control circuit of a hardware accelerator having a plurality of MCTs, where each MCT comprises a plurality of processing cores, an instruction to create a plurality of isolated partitions of processing cores, and enabling or disabling, by the controller circuit, one or more buses between two or more of the plurality of MCTs to create the plurality of isolated partitions of processing cores.

In some cases, the instruction may be received at run-time. The one or more buses may include at least one of: a router bus, a message bus, or a broadcast bus. Furthermore, enabling or disabling the one or more buses further may include controlling, by the control circuit, at least one of a plurality of mesh routers coupled between the two or more of the plurality of MCTs.

In another illustrative, non-limiting embodiment, a hardware accelerator may include a plurality of processing cores and an isolated partition control circuit coupled to the plurality of processing cores, the isolated partition control circuit configured to dynamically partition the plurality of processing cores into a plurality of isolated partitions to prevent an application executed on one more processing cores of a first isolated partition from corrupting or interfering with another application executed on a different one or more processing cores of a second isolated partition.

The hardware accelerator may include a plurality of mesh routers coupled to the isolated partition control circuit, where the isolated partition control circuit is configured to use at least one of the plurality of mesh routers to enable or disable one or more internal buses to dynamically partition the plurality of processing cores.

In various embodiments, systems and methods described herein may provide for dynamically creating multiple isolated partitions in a multi-core processing system in a System-On-a-Chip (SoC), Field-Programmable Gate Array (FPGA), Application-Specific Integrated Circuit (ASIC), or any other suitable data processing system comprising a plurality of discrete circuits or semiconductor Intellectual Property (IP) cores (collectively referred to as "SoC devices" or simply "devices") disposed in a single electronic or semiconductor package.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The scope of the present disclosure includes any feature or combination of features disclosed herein (either explicitly or implicitly), or any generalization thereof, whether or not it mitigates any or all of the problems addressed herein. Accordingly, new claims may be formulated during prosecution of this application (or an application claiming priority thereto) to any such combination of features. In particular, with reference to the appended claims, features from dependent claims may be combined with those of the independent claims and features from respective independent claims may be combined in any appropriate manner and not merely in the specific combinations enumerated in the appended claims.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores may be somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow. It is intended that the following claims be interpreted to embrace all such modifications and changes and, accordingly, the above description to be regarded in an illustrative rather than a restrictive sense.

The previous detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure may be combined with one or more other aspects of this disclosure to form new aspects.

In many implementations, systems and methods described herein may be incorporated into a wide range of electronic devices including, for example, computer systems or Information Technology (IT) products such as servers, desktops, laptops, memories, switches, routers, etc.; telecommunications hardware; consumer devices or appliances such as mobile phones, tablets, wearable devices, Internet-of Things (IoT) devices, television sets, cameras, sound systems, etc.; scientific instrumentation; industrial robotics; medical or laboratory electronics such as imaging, diagnostic, or therapeutic equipment, etc.; transportation vehicles such as automobiles, buses, trucks, trains, watercraft, aircraft, etc.; military equipment, etc. More generally, these systems and methods may be incorporated into any device or system having one or more electronic parts or components.

Systems and methods for dynamically creating multiple isolated partitions in a multi-core processing system have been described. For example, an illustrative, non-limiting embodiment, an integrated circuit may include: a plurality of routers configured to provide a mesh network among a plurality of muti-cluster tiles (MCTs), where each MCT comprises a plurality of processing cores, and a control circuit coupled to the plurality of routers, where the control circuit is configured to control at least one of the plurality of routers to enable or disable at least a portion of the mesh network to create, among the plurality of processing cores, isolated partitions of processing cores.

For sake of brevity, conventional techniques related to signal processing, sampling, sensing, analog-to-digital conversion, computer architecture, and PWM, have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although the invention(s) are described herein with reference to specific embodiments, various modifications and changes may be made without departing from the scope of the present invention(s), as set forth in the claims below. Accordingly, the specification and figures are to be regarded in an illustrative rather than a restrictive sense, and all such modifications are intended to be included within the scope of the present invention(s). Any benefits, advantages, or solutions to problems that are described herein with regard to specific embodiments are not intended to be construed as a critical, required, or essential feature or element of any or all the claims.

Reference is made herein to "configuring" a device or a device "configured to" perform some operation(s). It should be understood that this may include selecting predefined circuits or logic blocks and logically associating them. It may also include programming computer software-based logic of a retrofit control device, wiring discrete hardware components, or a combination of thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. An integrated circuit, comprising:
a plurality of routers configured to provide a mesh network among a plurality of muti-cluster tiles (MCTs), wherein each MCT comprises a plurality of processing cores; and
a control circuit coupled to the plurality of routers, wherein the control circuit is configured to control at least one of the plurality of routers to enable or disable at least a portion of the mesh network to create, among the plurality of processing cores, isolated partitions of processing cores.

2. The integrated circuit of claim 1, wherein the portion of the mesh network comprises at least one of: a router bus, a message bus, or a broadcast bus.

3. The integrated circuit of claim 1 or 2, wherein the control circuit is configured to control the plurality of routers at run-time.

4. The integrated circuit of any preceding claim, wherein the integrated circuit is configured to allow access to Level 2 (L2) cache within a given isolated partition to processing cores of the given isolated partition to the exclusion of any other processing core of any other isolated partition.

5. The integrated circuit of any preceding claim , wherein each of the isolated partitions of processing cores comprises an equal number of processing cores.

6. The integrated circuit of any preceding claim, wherein the plurality of isolated partitions comprises: two, three, or four isolated partitions.

7. The integrated circuit of claim 6, wherein the plurality of isolated partitions comprises two isolated partitions, and wherein each isolated partition comprises 32, 64, or 128 processing cores.

8. The integrated circuit of claim 6 or 7, wherein the plurality of isolated partitions comprises three isolated partitions, wherein a first isolated partition and a second isolated partition each comprises 16, 32, or 64 processing cores, and wherein a third isolated partition comprises a different number of processing cores than the first and second isolated partitions.

9. The integrated circuit of any of claims 6 to 8, wherein the plurality of isolated partitions comprises four isolated partitions, and wherein each isolated partition comprises 16, 32, or 64 processing cores.

10. The integrated circuit of any preceding claim, wherein the control circuit is configured to control another one or more of the plurality of routers to enable or disable at least another portion of the mesh network to create another isolated partition of processing cores distinct from the isolated partitions of processing cores.

11. The integrated circuit of any preceding claim, wherein at least a given one of the plurality of isolated partitions enables multi-core processing of applications executed on processing cores of the given isolated partition.

12. The integrated circuit of claim 11, wherein the applications comprise virtual applications.

13. The integrated circuit of any preceding claim, wherein at least one of the plurality of isolated partitions allows shared execution of an application between one or more processing cores of the at least one isolated partition to the exclusion of any other processor core of any other isolated partition.

14. The integrated circuit of claim 13, wherein the at least one of the plurality of isolated partitions further comprises a context management circuit configured to switch a context of the one or more processing cores between a first application and a second application within the at least one isolated partition.

15. A method, comprising:
receiving, at a control circuit of a hardware accelerator having a plurality of muti-cluster tiles (MCTs), wherein each MCT comprises a plurality of processing cores, an instruction to create a plurality of isolated partitions of processing cores; and
enabling or disabling, by the controller circuit, one or more buses between two or more of the plurality of MCTs to create the plurality of isolated partitions of processing cores.
